(19) Europäisches Patentamt
European Patent Office
Office européen des brevets

(11) **EP 2 538 329 A1**

(12) **EUROPEAN PATENT APPLICATION**

(43) Date of publication:
**26.12.2012 Bulletin 2012/52**

(51) Int Cl.:
***G06F 9/50*** (2006.01)          ***H04L 29/08*** (2006.01)

(21) Application number: **11170840.0**

(22) Date of filing: **21.06.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Unified Computing Limited
County Cork (IE)**

(72) Inventors:
• **Kennedy, James
Cork, County (IE)**
• **Healy, David
Cork, County (IE)**

(74) Representative: **O'Connor, Michael Donal
O'Connor Intellectual Property
Suite 207, Q House
Furze Road
Sandyford, Dublin 18 (IE)**

(54) **A Method of Processing Multiple Components of a Processing Job in Parallel Across a Plurality of Clusters**

(57)     This invention relates to a method of processing multiple components of a processing job in parallel across a plurality of clusters. Data processing clusters are used for computationally expensive jobs to speed up the processing time of those jobs. There is a problem with the known methods in that they are limited to the available resources of a single cluster and they usually do not utilise the available resources optimally resulting in waste and inefficiencies. The method according to the invention partitions a data processing job, allocates the job components across several clusters before creating ProcessJobs for each of the clusters. A plurality of processing server daemons, one on each head node of a cluster receives the ProcessJob and generates a job description for a job manager on the head node. The job is processed across multiple clusters and all the clusters return their results to the processing server via the processing server daemon.

Fig. 1

## Description

This invention relates to a method of processing multiple components of a processing job in parallel across a plurality of clusters.

Data processing clusters are commonly used for applications that have a very high data processing requirement. The data processing clusters each typically contain several powerful processors that are used to process data in parallel in order to reduce the amount of time required to process the data.

Some entities that frequently require the services of a data processing cluster have created their own private data processing cluster. In some cases, those entities will be willing to share their data processing cluster with their partners. If their partners also have access to their own private data processing cluster, the two partners are usually able to access the other partner's data processing cluster if their own data processing cluster is operating at or near maximum capacity and there is spare capacity on their partner's data processing cluster.

The last few years has also seen the growth of 3rd party operated data processing clusters including so-called cloud-based data processing clusters. These 3rd party-operated data processing clusters are commonly used by entities that do not have access to their own private data processing cluster or by entities that require more data processing capability than they have at their disposal in their own and/or their partner's data processing clusters at that moment in time.

Although there are numerous benefits and advantages arising from processing data using a data processing cluster, hereinafter simply referred to as a "cluster", there are also problems with the known methods. At present, although a processing job can be divided amongst the individual processors in a cluster and processed by the cluster, it is difficult to divide a job amongst several processors across two or more clusters. This can lead to significant inefficiencies and waste.

For example, if a processing job is too large or if the processing job must be completed faster than the available capacity of a proprietary cluster could process the data, the processing job must be outsourced to either a partner or a 3rd party provider. If a 3rd party provider is used, this can result in significant expense. In many cases, the party requiring the data processing services own resources that were not sufficient to handle the processing job within the required timeframe will lie idle resulting in a waste of those resources.

Furthermore, due to the fact that the data processing jobs cannot be processed across a plurality of clusters, there is an inherent limitation placed on the speed at which any data processing job can be completed in that it is limited to the processing time required by the largest available cluster at that moment in time.

It is an object of the present invention to provide a method that overcomes at least some of the problems and limitations of the known methods.

## Statements of Invention

According to the invention there is provided a method of processing multiple components of a processing job in parallel across a plurality of clusters, at least one of which is located in a remote location, the method being performed in a system comprising a processing server having accessible memory, and a plurality of clusters, each cluster having a head node, a plurality of worker nodes and accessible memory, the head node having loaded thereon a processing server daemon and a job manager, each of the worker nodes having loaded thereon a job manager, the method comprising the steps of:

the processing server:

    (a) partitioning the processing job into a plurality of components;
    (b) allocating the components to the plurality of clusters;
    (c) creating a ProcessJob object particular to each component;
    (d) transmitting each of the ProcessJob objects to the processing server daemon on the head node of the appropriate cluster for processing;

the processing server daemons each:

    (e) receiving the ProcessJob object of the component allocated to their cluster from the processing server;
    (f) generating a job description for the job manager on the head node of their cluster particular to the ProcessJob object;
    (g) submitting the job description to the head node job manager so that the head node job manager can manage the processing of the component by the worker nodes of the cluster; and
    (h) on completion of the processing of the component of the processing job by the cluster, transmitting a result file back to the processing server; and

the processing server storing the plurality of result files received from each of the clusters in accessible memory.

By having such a method, it is possible to spread a data processing job across multiple clusters. In this way, the available processing power at ones disposal is effectively only limited by the total cumulative available processing power available from all sources at any given moment in time. This will enable data processing jobs to be completed quicker than was heretofore the case. Furthermore, the method according to the present invention will enable those entities with their own private cluster to utilise that cluster to its maximum capacity. Data processing jobs can be divided up into components and one of the components can be processed on the private cluster while the remaining components can be outsourced to partners or 3rd party providers. In addition to this, the method according to the present invention will allow parties to take advantage of different data processing costs and data processing speeds offered by different 3rd party providers to optimise their available budget.

In one embodiment of the invention there is provided a method comprising the steps of the processing server creating a Global ProcessJob object and storing all the ProcessJob objects particular to each component in the Global ProcessJob object. This is seen as a useful way to keep track of the individual data processing jobs that are being provided to the plurality of clusters.

In one embodiment of the invention there is provided a method comprising the step of the processing server creating an Allocation object containing the component and a cluster identifier particular to the cluster to which that component has been allocated.

In one embodiment of the invention there is provided a method comprising the step of the processing server storing a list of the Allocation objects in the Global ProcessJob object.

In one embodiment of the invention there is provided a method comprising the intermediate step of the processing server transmitting at least one file required for processing of the component to each of the head nodes prior to transmitting the ProcessJob objects to the processing server daemons.

In one embodiment of the invention there is provided a method in which the step of the processing server daemon generating a job description comprises the processing server daemon generating a script file. This is seen as a particularly efficient way to implement the invention, particularly when the invention is being used in the area of 3D scene file rendering.

In one embodiment of the invention there is provided a method in which the step of the processing server daemon generating a job description comprises the step of the processing server daemon creating at least one folder in the cluster's accessible memory to store one or more job input files and one or more execution output files.

In one embodiment of the invention there is provided a method in which the head node job manager returns a job manager reference to the processing server daemon.

In one embodiment of the invention there is provided a method in which the processing server stores the daemon reference in the Allocation object associated with that component.

In one embodiment of the invention there is provided a method in which the processing server daemon monitors job execution progress by checking for the existence of execution output files. This is seen as a fast way to provide an indication of the progress of a particular data processing job.

In one embodiment of the invention there is provided a method in which the processing server daemon monitors job execution progress by querying the job manager. This is seen as a particularly efficient and accurate way of monitoring the progress of a data rendering job and will provide the most accurate appraisal of the jobs progress.

In one embodiment of the invention there is provided a method in which the processing server daemon transmits job execution progress data to the processing server.

In one embodiment of the invention there is provided a method in which the processing server transmits job execution progress data onwards to a client device.

## Detailed Description of the Invention

The invention will now be more clearly understood from the following description of some embodiments thereof given by way of example only with reference to the accompanying drawings, in which:-

Figure 1 is a diagrammatic representation of a system in which the method according to the invention is performed; and

Figure 2 is a more detailed view of a data processing cluster.

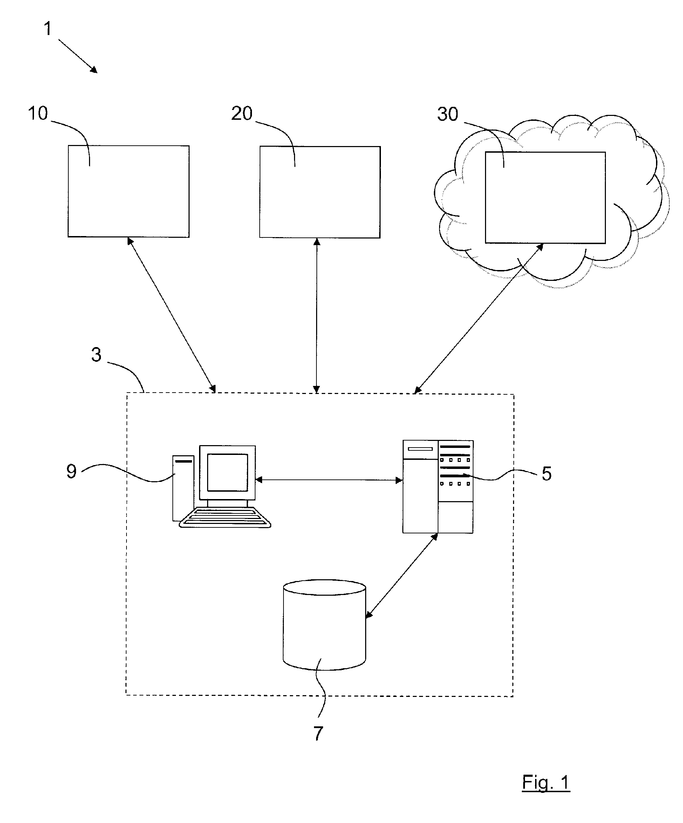

Referring to Figure 1, there is shown a system, indicated generally by the reference numeral 1, in which the method according to the present invention may be performed. The system 1 comprises a shared file network 3 comprising a processing server 5, accessible memory 7 and a client device 9. The system further comprises an In-house data processing cluster 10, a remote partner data processing cluster 20 and a 3rd party data processing cluster 30, in this case a cloud-based cluster. The In-house cluster 10, the partner cluster 20 and the 3rd party cluster 30 each comprise a head node (not shown) and a plurality of worker nodes (not shown). The head nodes each have a processing server daemon and a job manager loaded thereon and the worker nodes each have a job manager loaded thereon.

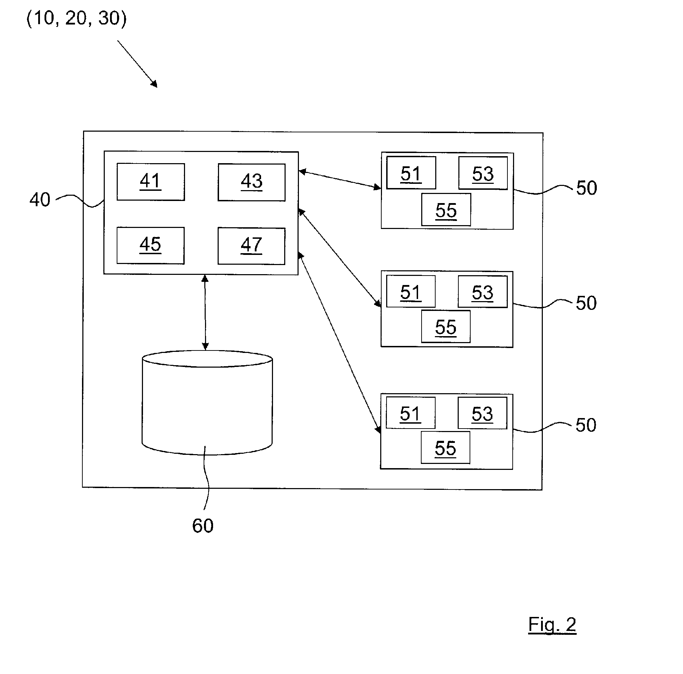

Referring to Figure 2, there is shown a more detailed view of a cluster 10, 20, 30. The cluster comprises a head node 40, a plurality of worker nodes 50 and an accessible memory 60. In the embodiment shown, there are only three worker nodes however it will be understood that typically there will be many more than three worker nodes provided. The head node 40 has installed thereon an operating system (OS), in this case Unix OS 41, Java Virtual Machine® 43, a processing server daemon 45 and a Job Manager, in this case Torque ® Job Manager 47. Each of the worker nodes 50 have installed thereon a Unix OS 51, a Torque ® Job Manager 53 and data processing software 55. The head node 40 has access to the accessible memory and can store results in the accessible memory.

In use, an operator of a client device 9 that requires the use of a cluster will submit a data processing job request to the processing server. The processing server will partition the data processing job into a plurality of components. Once the job has been partitioned, the processing server 5 will allocate the components to the plurality of available clusters. It is envisaged that this allocation will be performed based on various criteria including the entities processing profile and a set of predetermined rules put in place by the company that requires the data to be processed. The processing server will thereafter creating a ProcessJob object particular to each component and transmit each of the ProcessJob objects to the processing server daemon 45 on the head node 40 of the appropriate cluster 10, 20, 30 for processing.

The processing server daemons 45 each receive the ProcessJob object of the component allocated to their cluster 10, 20, 30 from the processing server 5 and generate a job description for the job manager 47 on the head node 40 of their cluster particular to the ProcessJob object. The processing server daemons 45 then submit the job description to the head node job manager 47 so that the head node job manager can manage the processing of the component by the worker nodes 50 of the cluster. On completion of the processing of the component of the processing job by the cluster 10, 20, 30, the processing server daemons 45 transmit a result file back to the processing server 5. The processing server then stores the plurality of result files received from each of the clusters 10, 20, 30 in accessible memory 7.

The method according to the invention will now be described in more detail with respect to a specific example in the field of 3D rendering, a notoriously computationally intensive field of endeavor however it will be understood that the present invention is not limited solely to application in this field. During operation, each cluster 10, 20, 30 runs a job manager 47 which accept job descriptions in the form of scripts. Numerous different types of job managers can be used to good effect including for example Platform Computing ® LSF, Altair ® PBS, Qube and the like. The Job managers 47 are responsible for spreading a job across tightly coupled clusters and the job description will describe the parameters of the job. For example, a PBS script file in "/usr/auser/scenes/scripts" might contain the following command:

/usr/bin/blender -b /home/auser/scenes/test.blend –o

/home/auser/scenes/images/frame_####.jpg  -F JPEG -x 1 -f ${PBS_ARRAYID}

-t 1 –d

…(1)

The file would be executed by a call to the job manager such as:

/usr/bin/qsub –o /home/auser/scenes/joboutput –t 20-100 /usr/auser/scenes/scripts

…(2)

In this example, the job manager sees the "-t 20-100" and interprets this to mean that it is desired to run 81 jobs on the machines that it has available in the cluster. The job manager 47 will then execute the script file 81 times but will set the ${PBS_ARRAYID} variable to "20" in the first one, "21" in the second, and so on until, in the final execution, ${PBS_ARRAYID} will have a value of 100. All of the job managers 47 have a similar scripting ability to allow programmers to specify the parameters of the parallel jobs they wish to run.

A processing server daemon (processing server software that runs on the "head node" 40 of each cluster 10, 20, 30) will be given an instruction from the processing server 5 (typically running in the entities premises) to perform a render of specified frames using specified files. All of the information required is stored in a ProcessJob object within the processing server 5. The relevant files necessary for the render are copied to the cluster 10, 20, 30 head node 40 before the job is transmitted to the cluster. An Allocation object contains the portion of the job which has been allocated and the name of the compute cluster. The ProcessJob object in the processing server contains a list of these allocations. The processing server will partition a single job over multiple clusters, allocating a portion of the job to each cluster. When the job is to be transmitted to the cluster, a new ProcessJob object, otherwise referred to as a RenderJob object, with a frame range equal to the allocation is created and sent to the processing server daemon 45 as a self-contained job.

Upon receiving a RenderJob, the processing server daemon 45 has a plug-in which can communicate with the job manager 47 on the head node. In the example above, there is a PBS daemon which will create the script file automatically, including creating the folders to store the job input files and execution output in on the cluster 10, 20, 30. The processing server daemon 45 then invokes the "qsub" command line operation described at (2) above to submit to the job manager 47. The job manager 47 will return a reference to that job within the job manager 47. This "Local Job ID" is transmitted back to the processing server 5 and stored in an Allocation object associated with the RenderJob.

In response to progress requests, the processing server daemon 45 monitors the execution by checking for the existence of output files (frames) and also checking the job's progress through the job manager. The job manager progress report is preferable as it will be more accurate and will describe exactly which jobs have finished. The "manual" way of checking for the existence of output files is less accurate as the output file for each frame will be created when the rendering of that frame begins. This progress is communicated by the processing server daemon to the Processing Server which, in turn, communicates the progress information to a client-side plugin executing inside the 3D artists' application on the client device 9. The client-side plugin updates a progress bar (not shown) to display this information.

When the job is complete, the processing server daemon communicates the result files over the network to the processing server daemon and the processing server stores them in the output folder specified by the 3D artist's application (for example, Autodesk Maya) on their client device.

The job manager in the present example is a Torque ® Job Manager but could be another Job Manager such as PBS ®, LSF ®, Qube ® or the like. The 3rd Party cloud-based clusters are Amazon ® Web Services ® but alternatively could be another provider such as Rebus ® Farm Render Service or the like. In the embodiments shown, there is shown a single partner cluster 20 and a single 3rd party cluster 30 however this is not intended to be limiting and many partner clusters 20 and 3rd party clusters 30 could be provided without departing from the scope of the invention.

Furthermore, in the embodiment shown, there is only a single client device in the shared file network 3 however it is envisaged that there may be many client devices in the shared file network all of which can be connected to the processing server 5. In addition to the above, in the embodiment shown, the processing server 5, the data/file repository (accessible memory 7) and the client device 9 are all represented by separate, individual pieces of equipment however it is envisaged that two or even all three of these pieces of equipment may be located on a single device.

In the embodiment described above, a Java Virtual Machine is installed on the head node however it will be understood that this is only necessary in those implementations where Java programs are to be run. It is envisaged that it may not be necessary to run a Java program in many instances. At present, a Java Virtual Machine is used to run the processing server daemon however this will not be necessary in other alternative implementations.

According to another aspect of the invention, it is envisaged that the method can be automated to a degree by providing a set of rules and policies that will allow the processing server to make decisions such as whether or not to send a job to a given cluster or how to divide a job up across multiple clusters in the most efficient way to obtain maximum use and benefit out of the available resources. Similarly, rules and policies may be used to determine the number of worker nodes that should be used, when the jobs should be sent out to the cloud based cluster, which cloud-based clusters or 3rd party clusters to use and so on. In this way, the most efficient data processing according to a predetermined profile and rules across multiple clusters can be achieved.

It will be understood that the method according to the present invention will be performed largely in software and therefore the present invention extends also to computer programs, on or in a carrier, comprising program instructions for causing a computer to carry out the method. The computer program may be in source code format, object code format or a format intermediate source code and object code. The computer program may be stored on or in a carrier, in other words a computer program product, including any computer readable medium, including but not limited to a floppy disc, a CD, a DVD, a memory stick, a tape, a RAM, a ROM, a PROM, an EPROM or a hardware circuit. In certain circumstances, a transmissible carrier such as a carrier signal when transmitted either wirelessly and/or through wire and/or cable could carry the computer program in which cases the wire and/or cable constitute the carrier.

It will be further evident that the present invention will be performed on more than one (processing) machine and even those parts of the method and system described in relation to a single processor or a single computer or machine may in fact be performed over two, three or more machines with certain parts of the computer-implemented method being performed by one device and other parts of the computer-implemented method being performed by another device. The devices may be part of a LAN, WLAN or could be connected together over a communications network including but not limited to the internet.

Many of the method steps can be performed "in the cloud", meaning that remotely located processing power may be utilised to process certain method steps of the present invention. It will be further understood that many of the method steps may not be performed in the cloud but could still be performed remotely, by which it is meant that the method steps could be performed either on a separate machine or machines in the same locality or jurisdiction or indeed on a separate machine or machines in one or more remote jurisdictions. Steps performed "in the cloud" may be performed in the same or in a different jurisdiction to the other steps. The present invention and claims are intended to cover those instances where the method is performed across two or more machines located in one or more jurisdictions.

In this specification the terms "comprise, comprises, comprised and comprising" and the terms "include, includes, included and including" are all deemed totally interchangeable and should be afforded the widest possible interpretation.

The invention is in no way limited to the embodiment hereinbefore described but may be varied in both construction and detail within the scope of the specification.

**Claims**

1. A method of processing multiple components of a processing job in parallel across a plurality of clusters, at least one of which is located in a remote location, the method being performed in a system comprising a processing server having accessible memory, and a plurality of clusters, each cluster having a head node, a plurality of worker nodes and accessible memory, the head node having loaded thereon a processing server daemon and a job manager, each of the worker nodes having loaded thereon a job manager, the method comprising the steps of:

   the processing server:

   (a) partitioning the processing job into a plurality of components;
   (b) allocating the components to the plurality of clusters;
   (c) creating a ProcessJob object particular to each component;
   (d) transmitting each of the ProcessJob objects to the processing server daemon on the head node of the appropriate cluster for processing;

   the processing server daemons each:

   (e) receiving the ProcessJob object of the component allocated to their cluster from the processing server;
   (f) generating a job description for the job manager on the head node of their cluster particular to the ProcessJob object;
   (g) submitting the job description to the head node job manager so that the head node job manager can manage the processing of the component by the worker nodes of the cluster; and
   (h) on completion of the processing of the component of the processing job by the cluster, transmitting a result file back to the processing server; and

   the processing server storing the plurality of result files received from each of the clusters in accessible memory.

2. A method as claimed in claim 1 comprising the steps of the processing server creating a Global ProcessJob object and storing all the ProcessJob objects particular to each component in the Global ProcessJob object.

3. A method as claimed in claim 2 comprising the step of the processing server creating an Allocation object containing the component and a cluster identifier particular to the cluster to which that component has been allocated.

4. A method as claimed in claim 3 comprising the step of the processing server storing a list of the Allocation objects in the Global ProcessJob object.

5. A method as claimed in any preceding claim comprising the intermediate step of the processing server transmitting at least one file required for processing of the component to each of the head nodes prior to transmitting the ProcessJob objects to the processing server daemons.

6. A method as claimed in any preceding claim in which the step of the processing server daemon generating a job description comprises the processing server daemon generating a script file.

7. A method as claimed in any preceding claim in which the step of the processing server daemon generating a job description comprises the step of the processing server daemon creating at least one folder in the cluster's accessible memory to store one or more job input files and one or more execution output files.

8. A method as claimed in any preceding claim in which the head node job manager returns a job manager reference to the processing server daemon.

9. A method as claimed in claim 9 in which the processing server stores the processing server daemon reference in the Allocation object associated with that component.

10. A method as claimed in any preceding claim in which the processing server daemon monitors job execution progress by checking for the existence of execution output files.

11. A method as claimed in any of claims 1 to 9 in which the processing server daemon monitors job execution progress by querying the job manager.

12. A method as claimed in claims 10 or 11 in which the processing server daemon transmits job execution progress data to the processing server.

13. A method as claimed in claim 12 in which the processing server transmits job execution progress data onwards to a client device.

1

10                    20                    30

3

9                                              5

7

Fig. 1

(10, 20, 30)

| | |
|---|---|
| 41 | 43 |
| 45 | 47 |

40

| 51 | 53 |
|---|---|
| | 55 |

50

| 51 | 53 |
|---|---|
| | 55 |

50

| 51 | 53 |
|---|---|
| | 55 |

50

60

Fig. 2

Europäisches
Patentamt

European
Patent Office

Office européen
des brevets

# EUROPEAN SEARCH REPORT

Application Number

EP 11 17 0840

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/078303 A1 (LI LI ERRAN [US] ET AL) 31 March 2011 (2011-03-31) * paragraphs [0020] - [0056] * * figures 1-5 * | 1-13 | INV. G06F9/50 H04L29/08 |
| X | Daniel Nurmi ET AL: "Eucalyptus : A Technical Report on an Elastic Utility Computing Archietcture Linking Your Programs to Useful Systems", UCSB Computer Science Technical Report Number 2008-10, 2008, pages 1-16, XP55012863, Santa Barbara, CA, USA Retrieved from the Internet: URL:http://open.eucalyptus.com/documents/n urmi_et_al-eucalyptus_tech_report-august_2 008.pdf [retrieved on 2011-11-23] * page 1 - page 10 * | 1-13 | |
| X | ANTONIO CELESTI ET AL: "How to Enhance Cloud Architectures to Enable Cross-Federation", CLOUD COMPUTING (CLOUD), 2010 IEEE 3RD INTERNATIONAL CONFERENCE ON, IEEE, PISCATAWAY, NJ, USA, 5 July 2010 (2010-07-05), pages 337-345, XP031739418, ISBN: 978-1-4244-8207-8 * the whole document * | 1-13 | TECHNICAL FIELDS SEARCHED (IPC) G06F H04L |

-/--

The present search report has been drawn up for all claims

| Place of search | Date of completion of the search | Examiner |
|---|---|---|
| Munich | 9 December 2011 | Noll, Joachim |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 11 17 0840

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RANJAN R ET AL: "Decentralized Overlay for Federation of Enterprise Clouds", 20100101, PAGE(S) 191 - 217 , 1 January 2010 (2010-01-01), XP007915821, Retrieved from the Internet: URL:http://www.cloudbus.org/papers/schandbook-chap9.pdf * page 191 - page 207 * ----- | 1-13 | |
| X | GABRIELE COMPOSTELLA ET AL: "LcgCAF: a CDF Submission Portal to Access Grid Resources", NUCLEAR SCIENCE SYMPOSIUM CONFERENCE RECORD, 2006. IEEE, PISCATAWAY, NJ, USA, PISCATAWAY, NJ, USA, 1 October 2006 (2006-10-01), pages 873-878, XP031083508, ISBN: 978-1-4244-0560-2 * the whole document * ----- | 1-13 | |

TECHNICAL FIELDS
SEARCHED      (IPC)

The present search report has been drawn up for all claims

| Place of search | Date of completion of the search | Examiner |
|---|---|---|
| Munich | 9 December 2011 | Noll, Joachim |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.........................................................................

& : member of the same patent family, corresponding
    document

## ANNEX TO THE EUROPEAN SEARCH REPORT
## ON EUROPEAN PATENT APPLICATION NO.

EP 11 17 0840

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2011

| Patent document cited in search report | Publication date | Patent family member(s) | Publication date |
|---|---|---|---|
| US 2011078303 A1 | 31-03-2011 | US 2011078303 A1<br>WO 2011041101 A1 | 31-03-2011<br>07-04-2011 |

For more details about this annex : see Official Journal of the European Patent Office, No. 12/82